# EUROPEAN PATENT SPECIFICATION

(11) **EP 4 003 568 B1**
(45) Date of publication and mention of the grant of the patent: **28.08.2024**
(21) Application number: 20743150.3
(22) Date of filing: 24.07.2020
(51) Int. Cl.: B01D 17/02, B01D 17/04, B01D 17/00, B01D 17/12, B01D 19/00, B01D 46/00

(54) **SEPARATOR FOR SEPARATING A LOWER DENSITY LIQUID FROM A FLUID STREAM**
ABSCHEIDER ZUM ABSCHEIDEN EINER FLÜSSIGKEIT GERINGERER DICHTE AUS EINEM FLUIDSTROM
SÉPARATEUR PERMETTANT DE SÉPARER UN LIQUIDE DE DENSITÉ INFÉRIEURE D'UN FLUX DE FLUIDE

(30) Priority: 24.07.2019 EP 19187985
(43) Date of publication of application: 01.06.2022
(73) Proprietor: Donaldson Filtration Deutschland GmbH, 42781 Haan (DE)
(72) Inventor: AMTMANN, Till, 42897 Solingen (DE)
(74) Representative: König Szynka Tilmann von Renesse Patentanwälte Partnerschaft mbB Düsseldorf
(86) International application number: PCT/EP2020/070945
(87) International publication number: WO 2021/013985

(56) References cited:
- EP-A2- 0 436 773
- DE-A1- 19 743 397
- GB-A- 2 260 133
- US-A- 5 417 848
- US-A- 5 681 462

## Description

The invention relates to a separator for separating a lower density liquid, in particular an oil from a fluid stream containing a mixture of a gas, the lower density liquid and a higher density liquid, in particular water. Furthermore, the invention relates to a method for separating a lower density liquid, in particular an oil from a fluid stream containing a mixture of a gas, the lower density liquid and a higher density liquid, in particular water. Furthermore, the invention relates to a use of the separator according to the invention and a compressed air system.

EP 0 846 484 B1 discloses a device for separating oil residues from a condensate in a compressed air system of the type comprising a condensate separator/air separator which separates the condensate from the air and is connected to a coalescence separator in which the aqueous phase of the condensate is separated from the oil residues. The device proposed there provides that the device comprises a filter for removing residual particles and a threshold valve which discharges the air separated from the condensate in said condensate separator. Such a device has a complicated structure.

A separator for separating oil from a condensate is known from EP 0 867 213 A1. The device has a separation chamber and a coalescence filter. The coalescence filter is arranged below the separation chamber. The device described there has a pressure pipe (there: supply conduit), with which a fluid stream is supplied under overpressure to a coalescence filter. A mixture of water and oil droplets is forced through a central pipe (there: central pipe) into the separation chamber.

A separator which has a decompression chamber (there: decompression chamber) is known from EP 0 436 773 B1. A vertical pipe is provided at the lower end of the decompression chamber, which pipe connects the decompression chamber to a sedimentation separature (there: sedimentation separature). The condensate to be cleaned is introduced by means of a feed inlet (there: feed inlet) into the vertical pipe, namely via an eccentric opening in order to apply a centrifugal force onto the inflowing condensate.

GB 2 260 133 A discloses a device for separating oil from an oil-water mixture. In the device of GB 2 260 133 A, the pressurized fluid mixture is first decompressed in a decompression chamber and then filtered in an area below the decompression chamber and separated into the fractions.

US 5 681 462 A discloses a device for separating liquids having different densities, comprising a container for the liquid, the container having at least two outlet openings. Also provided is at least one coalescing filter to which the liquid to be separated can be fed. The depressurization of the fluid mixture as well as the separation of the fluid mixture into its phases takes place in a common volume of the container.

Against this background, the object of the invention was to suggest a separator and a method for separating a lower density liquid, in particular an oil from a fluid stream, containing a mixture of a gas, the lower density liquid and a higher density liquid, in particular water, and to propose a use for such a separator and a compressed air system, which can be provided with less effort and/or have a better separation rate with respect to the prior art.

This object is solved by the subject matters of independent claims 1, 8 12, 13, 14 and 15. Advantageous embodiments are specified in the subclaims and the description below.

The invention is based on the idea of a fluid stream containing a mixture of a gas, a lower density liquid and a higher density liquid, and possibly also particles or still other gases or liquids, to be introduced via a supply into a coalescence filter arranged in a decompression chamber of the separator, namely in an interior space at least partially surrounded by a coalescence filter medium. According to the inventors' understanding, a decompression of the fluid stream under overpressure in the region of the coalescence filter and at least in part during the passage of the fluid stream or the individual components of the fluid stream through the coalescence filter takes place in this way. According to the inventors' assessment, a good separation of the gas located in the mixture contained in the fluid stream from the lower density liquid and the higher density liquid thus takes place. It is also conceivable that this type of decompression increases the efficiency of the coalescence filter and presumably results in droplets of the lower density liquid contained in the fluid stream coalescing more efficiently into larger droplets of the lower density liquid as it passes through the coalescence filter, as is the case with the use of coalescence filters in separators of the prior art. It is also conceivable that this type of decompression presumably results in droplets of the higher density liquid optionally contained in the fluid stream coalescing more efficiently to larger droplets of higher density liquid with passage through the coalescence filter, as is the case with the use of coalescence filters in separators of the prior art.

The separator according to the invention can have a pressure pipe as a supply, via which pressure pipe the fluid stream can enter into the separator under pressure. The pressure pipe is formed to withstand the overpressure of the fluid stream. In the preferred field of application of the separator according to the invention, namely in compressed air systems, the fluid stream, which is frequently the condensate stream from a condensate drain of such a compressed air system, has an overpressure above atmospheric pressure. This usually lies between 3 to 20 bar. For such fields of application, the pressure pipe would be designed such that it can withstand such overpressure. In conceivable, other fields of application of the separator according to the invention, it can be that the fluid stream is under a considerably higher pressure (for example, 100 bar or more), so that the pressure pipe is designed to withstand such overpressure. The pressure pipe can be a pipe of an existing compressed air system, in particular the pipe which continues from a condensate drain of a compressed air system and the end of which is designed so that it projects into the decompression chamber of the separator according to the invention. However, embodiments are also conceivable in which the separator is designed as an independent unit which is to be connected to a pipeline of a larger system. In such a case, the term "supply" would refer to the pipe which conducts the fluid stream within the decompression chamber to the interior space of the coalescence filter. It is not necessary according to the invention for the supply to have an end which projects outwards beyond a possibly existing outer wall of the decompression chamber. The supply can also end with a mouth opening on a boundary wall of the separator. Designs are also conceivable in which the decompression chamber is designed pot-like and the coalescence filter sits in the middle of the upper opening of the pot-like decompression chamber and its interior space is closed at the top by a lid having an opening. In such a design, the opening in the lid can be the supply of the separator according to the invention, through which the fluid stream can flow under overpressure. The exact conceptual assignment of the term "supply" is a question of system boundaries. The invention is directed toward a separator, which as such is a marketable good and can be distributed independently and can be purchased by system operators. Therefore, as long as only characteristics of the separator itself and not its integration into a system are described, a hole in a lid of a coalescence filter can be understood as a "supply", even when, in the installation situation of the separator in the system itself, a pipeline end belonging to the tube network of the system projects through this hole into the interior space of the coalescence filter and the fluid stream flows through this pipeline end into the interior space of the coalescence filter. This conceptually does not change the fact that a hole can also be understood as a "supply", because, even with a pipeline end passing through the hole, through which the fluid stream flows, the fluid stream will also flow through the hole, namely through the pipeline end located in the hole.

It should be understood that the supply can provide the liquid without overpressure as an alternative. In this case, the liquid may, for example, run by gravity in the supply, e.g. the supply is inclined and the liquid may move by gravity in the supply. If in the supply the fluid is provided without overpressure, a supply for applying pressure to the fluid can be provided. This allows the fluid to first enter the interior of the coalesce filter without any overpressure in the supply for the fluid. The pressure line can then be used to pressurize the fluid in the interior of the coalescing filter. The pressure line can be an additional pressure line which is separate from the supply. The pressure line can in addition or as an alternative use at least partially the supply, for example especially the supply in the end region which is situated or leaddeing into the interior space of the coalescence filter.

In case the supply provides the fluid without overpressure, the decompression chamber can be depressurized via the decompression opening from the level of pressure applied by the pressure line to the pressure level of the environment to which the decompression opening can connect the decompression chamber,

Further, it should be understood that the alternatives a) the fluid stream is under overpressure in the supply and b) the fluid stream is supplied without overpressure and then pressurized in the coalescence filter are not mutually exclusive alternatives, but alternatives that can be applied simultaneously or at different times on one and the same device.

The interface of the supply to a pipeline system, to which the separator according to the invention is connected, can be provided, for example, by a threaded connection, a flange, a hose nozzle or a quick coupling. There are conceivable designs in which the separator according to the invention is firmly embedded in a pipeline system. For example, it is conceivable that an end of the pipeline system forming the supply can not be separated from the rest of the pipeline system nondestructively. However, particularly preferred are designs in which the separator according to the invention is a separately executed, self-transportable and interchangeable good, which is why in particular those designs are preferred as an interface of the supply to a pipeline system to which the separator according to the invention is connected that allow a detachable connection.

The separator according to the invention has a decompression chamber having a decompression opening. The decompression opening connects the interior of the decompression chamber to an environment of the decompression chamber. Embodiments are conceivable in which the decompression opening of the decompression chamber is formed by a hole in a wall of the decompression chamber. It is also conceivable that the decompression opening is formed at the end of a pipe which leads away from the interior of the decompression chamber and into the environment of the decompression chamber. Such a pipe could begin at a hole in a wall of the decompression chamber. Such embodiments can prove to be particularly useful when the separator according to the invention is provided with a housing and the arrangement of the individual elements of the separator within the housing having been chosen so that the decompression chamber itself is not directly adjacent to a wall of the housing of the separator. In a decompression chamber arranged in the interior of a housing of the separator, such a pipe can then be used to connect the interior of the decompression chamber to the environment around the housing of the separator. Embodiments are also conceivable in which the decompression chamber is designed as a pot. In such an embodiment, the decompression opening would be the entire upper opening of the pot or could be an opening in a lid for the upper opening of the pot.

Embodiments are conceivable in which further elements are provided in advance to the decompression opening or within the decompression opening, which elements influence the gas which would like to flow through the decompression opening from the interior of the decompression chamber into the environment of the decompression chamber. Such an element can, for example, be a filter element. Such a filter element can be used to retain liquid droplets or solid particles still located in the gas. It can thus be achieved that only gas without a proportion of liquid droplets and/or solid particles or at least gas having a greatly reduced proportion of liquid droplets and/or solid particles flows through the decompression opening out of the interior of the decompression chamber into the environment of the decompression chamber. The filter element can be used, for example, to absorb odors and/or so-called "volatile organic carbon" (volatile organic carbons / hydrocarbons).

The separator according to the invention has a coalescence filter which is arranged in the decompression chamber. In a preferred embodiment, it is provided that liquid droplets which emerge from the coalescence filter medium at the outer circumference of the coalescence filter or liquid droplets which move downwards at the outer circumferential area of the coalescence filter medium detach from the coalescence filter medium and fall into a lower region the decompression chamber in accordance with gravity.

In a preferred embodiment, the decompression chamber has a bottom, the shape of which can influence the flow direction or flow velocity of a liquid rising up on the bottom. For example, it is conceivable that the bottom of the decompression chamber is configured frusto-conical and thus allows a liquid rising up on a bottom to flow into the middle and downwards. Embodiments having a flat bottom are likewise conceivable.

In a preferred embodiment, the decompression chamber has side walls. In a preferred embodiment, the side walls form a hollow cylinder, so that the decompression chamber can be formed by a hollow cylinder and a bottom closing the hollow cylinder from below. Furthermore, it is conceivable that the decompression chamber has a lid in which the decompression opening is configured.

The separator according to the invention has a coalescence filter, which is arranged in the decompression chamber. In a preferred embodiment, the coalescence filter is arranged at a distance from a bottom of the decompression chamber. Additionally or alternatively, the coalescence filter is arranged at a distance from the side walls of the decompression chamber.

Embodiments are conceivable in which the coalescence filter is arranged suspended in the decompression chamber. For example, it is conceivable for the decompression chamber to have a ring which is connected, by means of spokes, to the walls bounding the decompression chamber laterally or to the wall, possibly designed hollow cylindrical, which bounds the decompression chamber laterally, and is supported thereby. The coalescence filter can have a protrusion and be inserted into the ring until the protrusion rests on the ring. It is likewise conceivable that a bayonet connection or a screw connection (for example, an internal thread on the ring, an external thread on the coalescence filter) is formed between the ring and the coalescence filter. Furthermore, designs are conceivable in which the decompression chamber is closed at the top by a lid and the lid has an opening into which the coalescence filter can be inserted. The coalescence filter can then protrude inwards from the lid; a support provided on the upper end of the coalescence filter can rest on the edge of the lid bounding the opening; again, bayonet connections or screw connections are conceivable here. Particularly preferably, the coalescence filter, in an upper region, particularly preferably on an upper end ring or on an upper end plate, has a connecting element for connection to a support structure or a lid of the decompression chamber. The coalescence filter thus hangs down in these embodiments and is supported at the top. In this case, it is not even necessary that the coalescence filter is supported by walls of the decompression chamber. As described in detail below, the separator according to the invention can also have a housing. Embodiments are conceivable in which, although the coalescence filter is arranged according to the invention in the decompression chamber, it is held in its position there by a support structure, for example, a support arm, connected to the housing.

Embodiments are conceivable in which the coalescence filter is designed as a so-called "double open end" filter (DOE filter). These are filters, the filter medium of which is arranged as a hollow cylinder around an interior space, wherein the filter medium is open at both ends. Most of these open ends are each provided with a ring (end ring). In order to form the desired filter configuration, in particular to form a filter which allows an inlet opening into the interior space and an "inside-to-outside" flow direction, upper and lower end plates are provided which close the open ends, wherein an opening is provided to form the inlet in one of the end plates. Typically O-ring seals are provided between the end rings and the end plates. The end plates are often braced against each other by threaded rods in order to bring about the sealing effect between the end plates and the end rings particularly well. In a preferred embodiment, it is conceivable that the upper end plate of such a DOE filter projects well beyond the outer circumference of the coalescence filter medium and is used as a lid for the decompression opening.

Elevated arrangements are also conceivable as alternative to hanging arrangements of the coalescence filter in the decompression chamber. In these, the coalescence filter itself can have a stand or legs with which it can be placed on the bottom of the decompression chamber. Designs are also conceivable in which a ring supported by legs/supports at the bottom of the decompression chamber or a platform supported by legs/supports at the bottom of the decompression chamber is provided, on which the coalescence filter is placed.

The coalescence filter has an interior space. The coalescence filter has a coalescence filter medium which at least partially surrounds the interior space. Embodiments are conceivable in which the interior space is partially bounded by the coalescence filter medium, while further components, for example, a bottom or a lid, are present, which further bound the interior space. For example, an embodiment is conceivable in which the coalescence filter medium forms a hollow cylinder and the hollow cylinder thus formed is formed at the bottom by a closed bottom and at the top by a closed lid having an opening for the entry of the fluid stream (supply). The interior space is then the space bounded by the hollow cylindrical coalescence filter medium, the bottom and the lid. However, embodiments are also conceivable in which the bottom and/or the lid is likewise produced from the coalescence filter medium. This would increase the available area of the coalescence filter medium. Embodiments are also conceivable in which the interior space is bounded only laterally by coalescence filter medium. In this case, the coalescence filter medium, which laterally bounds the interior space, can be formed hollow cylindrical in the already described embodiment. However, embodiments are also conceivable in which the coalescence filter medium is tubular, but has a triangular, rectangular or polygonal cross-section. Spherical or egg-shaped configurations of the coalescence filter medium are also conceivable.

The use of flat, plate-shaped coalescence filter media is also conceivable. For example, an interior space can be created by the formation of appropriately designed walls in the decompression chamber, which walls are particularly preferably also firmly integrated in the decompression chamber or even by parts of the walls of the decompression chamber itself, for example, being bounded by 3 solid walls and a closed bottom and a lid having an inlet opening (supply) and having a plate-shaped coalescence filter medium as a fourth wall. The plate-shaped coalescence filter medium can be inserted, for example in the manner of a slider into a corresponding receptacle. For example, it is conceivable that an interior space is created in the upper region of the decompression chamber, virtually like a nest, by firmly installed boundary walls, which can even be part of the walls of the expansion chamber, which interior has the plate-shaped coalescence filter medium as the fourth wall; the drops running off the outside of the coalescence filter medium dissolve at the lower end of the coalescence filter medium and drip down towards the bottom of the decompression chamber. Of course, embodiments are also conceivable in which a plurality of walls of the coalescence filter are formed by plate-shaped coalescence filter media. Cube-shaped coalescence filters which have plate-shaped coalescence filter media on all side walls and are arranged at a distance from the side walls of the decompression chamber in the decompression chamber are also conceivable.

In particular, the coalescence filter medium is chosen to be more wettable by the dispersed phase than by the continuous phase. Most preferably, the coalescence filter medium is well wettable by the dispersed phase. Most preferably, the coalescence filter medium is poorly wettable by the continuous phase. In a preferred application, such as an oil-in-water emulsion, the dispersed phase is the low density phase, such as oil, and the continuous phase is the higher density phase, such as water. However, it is also conceivable to have designs where the dispersed phase is the higher density phase, such as water, and the continuous phase is the lower density phase, such as fuel, such as diesel.

In a preferred embodiment, the coalescence filter medium is designed in multiple layers. In a preferred embodiment, at least one layer arranged further inwards (the layer which is arranged closer to the interior space) is made finer than a layer arranged further outward (further away from the interior space). In a preferred embodiment, at least the majority of the layers arranged further inwards (the layer which is arranged closer to the interior space) are made finer than a layer respectively arranged further outward (further away from the interior space). In a preferred embodiment, no further outwardly arranged layer is made finer than a further inwardly arranged layer.

Whether a layer is finer than another layer can be determined with the bubble point test, for example, or by measurement with a porosimeter, for example. One layer is especially preferred said to be "finer" relative to another layer when the mean pore size of the "finer" layer is less than the mean pore size of the other layer and/or when the air resistance for an air stream of 5.3 cm/s (0.053 m/s) is greater than the air resistance at 5.3 cm/s of the other layer.

In a preferred embodiment, the coalescence filter medium has a filter depth (wall thickness) of 1 to 100 mm, preferably 2 to 50 mm, more preferably 3 to 30 mm and most preferably 6 to 15 mm.

In a preferred embodiment, the method according to the invention is performed so that an flow velocity of 0.005 to 10 mm/s (0.000005 to 0.01 m/s), preferably 0.01 to 1 mm/s (0.00001 to 0.001 m/s), more preferably from 0.02 to 0.04 mm/s (0.00002 to 0.00004 m/s) is set via the coalescence filter medium. The flow velocity is understood to be the ratio of the volume flow to the flow-through area of the filter (volume flow/flow-through area of the filter).

In a preferred embodiment, the coalescence filter medium has a first group of layers arranged in the flow direction in succession from inside to outside, which can be referred to as coalescence filter layers, and a second group of layers arranged in the flow direction in succession from the inside to the outside, which can be referred to as droplet enlargement layers. The group of coalescence filter layers is arranged further inside (closer to the interior space), the group of droplet enlargement layers is arranged further out (further distant from the interior space).

In a preferred embodiment, the layers of the coalescence filter layers have a mean pore size of 0.05 to 10 µm, more preferably from 0.1 to 2.0 µm, particularly preferably from 0.4 to 1.0 µm. The layers of coalescence filter layers need not be designed the same, but can be designed equal. However, it is also conceivable that the mean pore size of a further inner layer of the group of coalescence filter layers is less than or larger than or equal to the mean pore size of a further outer layer of the group of coalescence filter layers.

In a preferred embodiment, the respective layer of coalescence filter layers have an air resistance at 5.3 cm/s from 1000 to 4000 Pa, particularly preferably from 1500 to 3000 Pa. The layers of coalescence filter layers need not be designed the same, but can be designed equal. However, it is also conceivable that the air resistance of a further inner layer of the group of coalescence filter layers is greater than or smaller than or equal to the air resistance of a further outer layer of the group of coalescence filter layers.

In a preferred embodiment, the layers of the coalescence filter layers have a thickness of 0.1 to 1 mm, more preferably of 0.2 to 0.6 mm. The layers of coalescence filter layers need not be designed the same, but can be designed equal.

In a preferred embodiment, the group of coalescence filter layers consists of 5 to 30, preferably from 8 to 24 and most preferably from 12 to 20 layers.

In a preferred embodiment, the layers of the drop enlargement layers have a mean pore size of 5 to 100 µm, more preferably from 10 to 50 µm, particularly preferably from 10 to 30 µm. The layers of the drop enlargement layers need not be designed the same, but can be designed the same. However, it is also conceivable that the mean pore size of a further inner layer of the group of droplet enlargement layers is smaller than or equal to the mean pore size of a further outward layer of the group of droplet enlargement layers.

In a preferred embodiment, the respective layer of the droplet enlargement layers has an air resistance at 5.3 cm/s from 25 to 500 Pa, particularly preferably from 50 to 300 Pa. The layers of the drop enlargement layers need not be designed the same, but can be designed the same. However, it is also conceivable that the air resistance of a further inner layer of the group of droplet enlargement layers is greater than or equal to the air resistance of a further outward layer of the group of droplet enlargement layers.

In a preferred embodiment, the layers of the droplet enlargement layers have a thickness of 0.1 to 1 mm, particularly preferably of 0.2 to 0.6 mm. The layers of the drop enlargement layers need not be designed the same, but can be designed the same.

In a preferred embodiment, the group of droplet enlargement layers consists of 5 to 30, preferably 8 to 24 and most preferably 12 to 20 layers.

In a preferred embodiment, the plurality of layers of the coalescence filter layers has a smaller mean pore size than the mean pore size of the layer of the droplet enlargement layers, which has the smallest mean pore size of the group of droplet enlargement layers. In a preferred embodiment, all layers of the coalescence filter layers have a smaller mean pore size than the mean pore size of the layer of the drop enlargement layers, which has the smallest mean pore size of the group of drop enlargement layers.

In a preferred embodiment, the majority of layers of the coalescence filter layers have a greater air resistance at 5.3 cm/s than the air resistance at 5.3 cm/s, which the layer of the group of droplet enlargement layers has, which has the greatest air resistance of all layers of the group of drop enlargement layers at 5,3 cm/s. In a preferred embodiment, all layers of the coalescence filter layers have a greater air resistance at 5.3 cm/s than the air resistance at 5.3 cm/s which the layer of the droplet enlargement layers has, which has the highest air resistance of all layers of the group of drop enlargement layers at 5.3 cm/s.

In a preferred embodiment, the coalescence filter has an inner support grid and/or an outer support grid. Particularly preferably, the coalescence filter medium is designed hollow cylindrical and the inner support grid is designed hollow cylindrical and the outer support grid is designed hollow cylindrical. In a preferred embodiment, the outer support grid, the inner support grid and the coalescence filter medium arranged therebetween are encompassed at the top by an upper end ring. The upper end ring prevents fluid passing through the inner support grid during its passage through the coalescence filter medium and its passage through the outer support grid escaping upwards. In a preferred embodiment, the outer support grid, the inner support grid, and the coalescence filter medium arranged therebetween are encompassed by a lower end ring. The lower end ring prevents fluid passing through the inner support grid during its passage through the coalescence filter medium and its passage through the outer support grid escaping downwards.

In a preferred embodiment, an upper end plate rests on the upper end ring, which also covers the opening of the upper end ring. Particularly preferably, a seal, in particular preferably an O-ring, is arranged between the upper end ring and the upper end plate. In a preferred embodiment, the upper end plate has an opening which serves as an inlet (supply) into the interior of the coalescence filter.

In a preferred embodiment, a lower end plate rests on the lower end ring, which also covers the opening of the lower end ring. Particularly preferably, a seal, in particular preferably an O-ring, is arranged between the lower end ring and the lower end plate.

If an upper end plate and a lower end plate are provided, then a connecting element, in particular a tensioning element, in particular preferably a screw or a threaded pin, can be provided, with which the upper end plate and the lower end plate are connected and with which preferably a pressure can be generated that can increase the sealing effect of the seal arranged between the lower end ring and the lower end plate, and/or the sealing effect of the seal arranged between the upper end ring and the upper end plate. For example, it is conceivable that an internal thread provided in the lower end plate, into which internal thread a threaded pin is screwed, which threaded pin penetrates a hole in the upper end plate and is onto which threaded pin is screwed a nut from the top. It is also conceivable that the lower end plate has a hole which is penetrated by a threaded pin and onto which a nut is screwed from below, wherein the threaded pin also penetrates a hole in the upper end plate, wherein a nut is screwed onto the threaded pin from above. Embodiments are also conceivable in which a plurality of connecting elements, in particular a plurality of clamping elements, more preferably a plurality of screws or a plurality of threaded pins are provided, with which the upper end plate and the lower end plate are connected and with which preferably a pressure can be generated which can increase the sealing effect of the the seal arranged between the lower end ring and the lower end plate and/or the sealing effect of the seal arranged between the upper end ring and the upper end plate.

The separator, with a separation device according to any of the claims 1 to 7, according to the invention has a supply, through which the fluid stream can flow under overpressure and which opens into the interior space of the coalescence filter. Such a supply can be provided by a hole in a wall bounding the interior space of the coalescence filter. For example, the coalescence filter can have a lid in which a hole is provided, through which the fluid stream can flow under overpressure into the interior space of the coalescence filter. Embodiments are also conceivable in which the supply is formed by a pipe which protrudes into the interior space of the coalescence filter. Likewise, embodiments are conceivable in which a lid of the coalescence filter has a pipeline projecting upwardly from it, which then forms the feed. Such an upwardly projecting pipeline can, for example, contain connection components with which the supply can be connected to a line network of a higher-level device. Comparable to the connections used in garden hoses, a supply could be configured extending upwardly from a lid. Likewise, such a supply can be designed as a hose connection.

In a preferred embodiment, the interior space of the coalescence filter is sealed off from the decompression chamber, so that gaseous or liquid fluid located in the interior space of the coalescence filter can only leave the interior space of the coalescence filter by way of the passage through the coalescence filter medium.

The separator according to the invention has a separation chamber. The separation chamber is arranged below the decompression chamber. The separation chamber has an upper outlet for lower density liquid and a lower outlet for a residual product. The lower density liquid separates from a residual product in the separation chamber due to the gravitational principle. Liquid droplets of the lower density liquid will float upward relative to a surrounding higher density liquid. It is conceivable that the separator according to the invention is operated with a process control in which the lower density liquid in the separation chamber separates completely from the higher density liquid, so that a state is reached in which the entire lower density liquid floats on the higher density liquid in the separation chamber. However, it can be assumed that a longer residence time of the two liquids in the separation chamber is necessary for such a process control. Therefore, the claim regarding the liquid (on which the lower density liquid floats) speaks of a "residual product". This is to express that the liquid below the lower density liquid floating thereupon can also be a mixture.

The upper outlet of the separation chamber allows the lower density liquid to be withdrawn from the separation chamber. The lower outlet of the separation chamber allows a removal of the residual product from the separation chamber.

The separator according to the invention provides a dip tube which has a first opening in the lower region of the decompression chamber and a second opening in the separation chamber. The dip tube thus serves to transfer liquids which collect in the lower region of the decompression chamber into the separation chamber. In this case, the dip tube can in particular preferably directly adjoin an opening in a bottom of the decompression chamber, without the dip tube projecting inwardly beyond the bottom of the decompression chamber. A good emptying of the decompression chamber can be brought about particularly preferably with such an embodiment. In particular, in combination with a truncated cone-shaped / funnel-shaped bottom, it can be achieved so that liquids located in the lower region of the decompression chamber flow well into the dip tube. However, embodiments are also conceivable in which the dip tube projects beyond a bottom of the decompression chamber into the interior of the decompression chamber. This creates a threshold. Such a threshold makes it possible to accumulate a sediment in the decompression chamber, which sediment does not flow via the dip tube into the separation chamber. Such embodiments can be used when other media, especially interfering substances are located in the decompression chamber, for example, particles or further liquids, in particular those having even higher density, which one does not want to transfer into the separation chamber by means of the dip tube. Procedures are conceivable in which a sediment is allowed to form in the decompression chamber, which sediment is then removed as part of maintenance. For example, precipitating colloids can be collected here.

In a preferred embodiment, a particle filter is arranged in the interior space of the coalescence filter. The particle filter can have an interior space. The particle filter has a particle filter medium which at least partially surrounds the interior space. Embodiments are conceivable in which the interior space is partially bounded by the particle filter medium, while further components, for example, a bottom or a lid, are present, which further bound the interior space. For example, an embodiment is conceivable in which the particle filter medium forms a hollow cylinder and the hollow cylinder thus formed is formed at the bottom by a closed bottom and at the top by a closed lid having an opening for the entry of the fluid stream (supply). The interior space is then the space bounded by the hollow cylindrical particle filter medium, the bottom and the lid. However, embodiments are also conceivable in which the bottom and/or the lid is likewise produced from the particle filter medium. This would increase the available area of the particle filter medium. Embodiments are also conceivable in which the interior space is bounded only laterally by particle filter medium. In this case, the particle filter medium, which laterally bounds the interior space, can be formed hollow cylindrical in the already described embodiment. However, embodiments are also conceivable in which the particle filter medium is tubular, but has a triangular, rectangular or polygonal cross-section. Spherical or egg-shaped configurations of the particle filter medium are also conceivable.

The use of flat, plate-shaped particle filter media is also conceivable. For example, a plate-shaped particle filter medium can be arranged upstream of a plate-like coalescence filter medium.

In particular, the particle filter medium is selected so that it can be wetted equally well or equally poorly by the dispersed phase (the phase having lower density) and the continuous phase (the phase having higher density).

In a preferred embodiment, the particle filter medium is designed in multiple layers. In a preferred embodiment, at least one layer arranged further inwards (the layer which is arranged closer to the interior space) is made coarser than a layer arranged further outward (further away from the interior space). In a preferred embodiment, at least the majority of the layers arranged further inwards (the layer which is arranged closer to the interior space) are made coarser than a layer respectively arranged further outward (further away from the interior space). In a preferred embodiment, no further outwardly arranged layer is made coarser than a further inwardly arranged layer.

Whether one layer is coarser than another can be determined with the bubble point test, for example, or by measuring with a porosimeter, for example. A layer is especially preferred said to be "coarser" in relation to another layer when the mean pore size of the "coarser" layer is greater than the mean pore size of the other layer and/or when the air resistance at 5.3 cm/s (0.053 m/s) is less than the air resistance of the other layer at an air flow of 5.3 cm/s.

In a preferred embodiment, the particle filter medium has a filter depth (wall thickness) of 0.1 to 10 mm, preferably 0.5 to 5 mm, more preferably 1 to 2 mm. Most preferably, the coalescence filter medium is pleated. If the particle filter is equipped with a pleated particle filter medium, the wall thickness of the pleated medium is understood as the thickness of all filter-medium-layers. The pleadt-height of the particle medium, that is, the distance from the deflection point to the deflection point, is preferably in the range of 5 to 50mm, preferably in the range of 7 to 15mm.

In a preferred embodiment, the method according to the invention is conducted so that an flow velocity of 0.005 to 10 mm/s (0.000005 to 0.01 m/s), preferably 0.01 to 1 mm/s (0.00001 to 0.001 m/s), more preferably from 0.01 to 0.02 mm/s (0.00001 to 0.00002 m/s) is set via the particle filter medium. In a preferred embodiment, the mean flow velocity across the particle filter medium is half as fast as the mean flow velocity across the coalescence filter medium.

In a preferred embodiment, the layers of the particle filter have a mean pore size of 5 to 100 µm, more preferably from 0.1 to 5 µm, particularly preferably from 0.2 to 3 µm, most preferably from 0.6 to 1.5 µm. The layers of the particle filter medium need not be designed the same, but can be designed the same. However, it is also conceivable that the mean pore size of a further inner layer of the particle filter medium is greater than or equal to the mean pore size of a further outer layer of the particle filter medium.

In a preferred embodiment, the respective layer of the particle filter medium has an air resistance at 5.3 cm/s from 50 to 750 Pa, particularly preferably from 100 to 600 Pa, most preferably from 200 to 400 Pa. The layers of the particle filter medium need not be designed the same, but can be designed the same. However, it is also conceivable that the air resistance of a further inner layer of the particle filter medium is less than or equal to the air resistance of a further outer layer of the particle filter medium.

The particle filter medium preferably has 10 or less than 10, more preferably 4 or less, most preferably 2 to 3 layers.

In a preferred embodiment, the coalescence filter has a hollow cylindrical coalescence filter medium and a bottom closing the hollow cylindrical coalescence filter medium from below, which can also be a coalescence filter medium, and an upper opening, wherein a particle filter is arranged in the interior space of the coalescence filter, which particle filter can be a hollow cylindrical particle filter medium and a bottom closing the hollow cylindrical particle filter medium from below, which can also be from a particle filter medium, and having a lid having an opening (supply) closing the hollow cylindrical particle filter medium from above, wherein the lid closes the upper opening of the coalescence filter and thus can be understood as a lid of the coalescence filter. Particularly preferably, a seal is provided on the outer circumference of the lid, which seals against an inner surface of a head ring of the coalescence filter, wherein the upper opening of the coalescence filter is surrounded by the head ring and the head ring delimits or bounds the coalescence filter and particularly preferably the hollow cylindrical coalescence filter medium from above. The head ring can be the topmost component of the coalescence filter.

In a preferred embodiment, a guide plate is provided within the separation chamber. The guide plate is particularly preferably arranged opposite the second opening of the dip tube. The use of a guide plate can serve to channel, in particular preferred to deflect, a liquid flow emerging from the second opening of the dip tube in a different direction. In a preferred embodiment, the dip tube has a longitudinal axis, wherein the second opening of the dip tube is configured in a plane perpendicular to the longitudinal axis of the dip tube and/or the guide plate is located in a plane which is at an angle of >30°, more preferably >45° and in particular preferably is at a right angle to the longitudinal axis of the dip tube. In a preferred embodiment, the guide plate is the bottom of a deflection pot arranged in the separation chamber. In a preferred embodiment, the dip tube protrudes into the deflection pot.

In a preferred embodiment, the deflection pot is open at the top and thus has an upper opening through which the dip tube, in a particularly preferred embodiment, can protrude into the deflection pot so that the second opening of the dip tube is located in the deflection pot. If the dip tube projecting into the deflection pot were not present, this opening would have a cross-sectional area A1 in a horizontal plane. Due to its presence, the dip tube protruding into the deflection pot reduces the opening area of the deflection pot. In the same horizontal plane, the dip tube has a cross-sectional area A2 predetermined by its outer circumference in this plane. For the passage of liquids upwards inside the deflection pot, the annular residual area remaining around the dip tube thus remains having the size A1 minus A2.

In a preferred embodiment, the deflection pot is arranged in a separation chamber with a hollow cylindrical wall, for example, in a pot-shaped separation chamber. If the deflection pot arranged in the separation chamber with a hollow cylindrical wall were not present, then the separation chamber would have a cross-sectional area A3 in a horizontal plane at the level at which the opening of the deflection pot would be arranged. The deflection pot arranged in the separation chamber with hollow cylindrical wall narrows due to its presence the free cross-sectional area A3 of the separation chamber. In the same horizontal plane, the deflection pot has a cross-sectional area A1' predetermined by its outer circumference in this plane (wherein in a first approximation, namely neglecting the wall thickness of deflection pot A1' = A1). For the passage of liquids through the free cross-section of the separation chamber in this horizontal plane past the outside of the deflection pot, for example, a sinking of liquid in the direction of the bottom of the separation chamber, the annular residual area remaining around the deflection pot thus remains having the size A3 minus A1' (which in a first approximation corresponds to A3 minus A1). In a preferred embodiment, (A3-A1) = (A1-A2) = 10 to 50 x A2.

In a preferred embodiment, the method according to the invention is performed in such a way that the phase boundary (the boundary between the part of the lower density liquid floating on the residual product and the residual product) has at least the distance H from the upper edge of the deflection pot, so that the liquid upwardly rising in the deflection pot and passing through the surface (A1-A2) is supplied a hollow cylindrical passage area of H × 2 × π × √(A1/π) extending over the upper edge of deflection pot to the phase boundary (the circumferential surface of a hollow cylinder having the height H and the radius of the deflection pot (radius deflection pot = √/(A1/π))). In a preferred embodiment, the method according to the invention is performed in such a way that a height H is set at which H × 2 × π ×√√(A1/π) = (A3-A1) = (A1-A2) = 10 to 50 x A2. Thus, the liquid rising in the deflection pot liquid is given enough space below the phase boundary in order to flow radially outward over the upper edge of the deflection pot and outside the deflection pot down towards the bottom of the separation chamber.

In a preferred embodiment, the upper outlet is an overflow. The overflow can be a simple breakthrough in a wall of the separation chamber. The overflow can have connections for collecting containers, for example, a 90° connection.

In a preferred embodiment, the overflow has a spout. Fluid emerging via the overflow is formed by the spout into a free jet. This free jet can be collected in a reservoir. Alternatively, it is conceivable that the upper outlet is designed as a pipeline, which leads in particular preferably at an angle downwards to the horizontal. Liquid, which is located in the separation chamber but above the lowest point of the opening of the pipe, enters the pipe from the separation chamber and continues through it from the separation chamber. Such a pipe can end in a collection container, for example. Embodiments are conceivable in which the upper outlet has a valve with which it can be closed. Likewise, embodiments are conceivable in which a pump is arranged following the upper outlet, wherein, for example, a pipeline can connect the upper outlet to the pump. Such a pump can be used to actively remove liquid from the separation chamber. In a particularly preferred embodiment, the separator has a collection container for liquid emerging from the upper outlet, wherein no valve and no pump are provided between the upper outlet and the collection container. As a result, the structure of the separator according to the invention is simplified.

The lower outlet can be designed as a pipeline. Particularly preferably, the lower outlet can be designed as a pipeline which leads downwards at an angle to the horizontal. Liquid, which is located in the separation chamber but above the uppermost point of the opening of the pipe, enters the pipe from the separation chamber and continues through it from the separation chamber. It is also to be expected that the hydrostatic pressure presses liquid into the opening of the pipe. Such a pipe can end in a collection container, for example. Embodiments are conceivable in which the lower outlet has a valve with which it can be closed. Likewise, embodiments are conceivable in which a pump is arranged following the lower outlet, wherein, for example, a pipeline can connect the lower outlet to the pump. Such a pump can be used to actively remove liquid from the separation chamber.

In a preferred embodiment, a valve closing the upper outlet configured as a pipeline can be a solenoid valve. In a preferred embodiment, a valve closing the lower outlet configured as a pipeline can be a solenoid valve.

In a preferred embodiment, in which the separator has a collection container for lower density fluid or a collection container for residual product or a collection container for higher density fluid, the collection container can have a level sensor, for example, an ultrasonic sensor.

In a preferred embodiment, an activated carbon filter is connected downstream the lower outlet. With the activated carbon filter, it is possible to further clean a residual product emerging through the lower outlet. A fiber-based adsorption filter can also be connected downstream the outlet. A filter medium can also be connected downstream the outlet, which filter medium is constructed as the coalescence filter medium.

In a preferred embodiment, a liquid level sensor is arranged in the separation chamber. In this case, embodiments are conceivable in which the area on which the liquid level sensor performs its measurement projects into the separation chamber. In an alternative embodiment, the area of the liquid level sensor, via which it performs its measurement, is integrated in a wall of the separation chamber.

The fluid level sensor can be used to activate a valve closing the lower outlet or a pump connected to the lower outlet. A process control is thus conceivable in which a passage of a liquid through the lower outlet is initially prevented. In this case, further liquid enters the separation chamber via the dip tube. This increases the liquid level in the separation chamber. If this liquid level reaches a predetermined level, the passage of liquid through the lower outlet can be released, whereby the liquid level in the separation chamber drops. Likewise, an activation of a valve or a pump is conceivable in which the size of the volume flow of the liquid emerging through the lower outlet is influenced. The liquid level in the separation chamber can also be influenced with such a measure. If the liquid level reaches a certain level due to a surge of liquid introduced into the separation chamber through the dip tube, the volume flow through the lower outlet can be increased by corresponding activation of the valve or the pump in order to set a specific liquid level.

In a preferred embodiment, the lower outlet has a valve by which it can be closed or opened. Additionally or alternatively, a pump is connected downstream of the lower outlet.

In a preferred embodiment, the separation chamber has a turbidity sensor, with which the turbidity of a liquid, in particular preferably of the residual product, can be determined. In a preferred embodiment, the separator has a second coalescence filter in the decompression chamber. In such an embodiment, the supply can be designed such that a fluid stream passing through it passes both into the interior space of the first coalescence filter and into the interior space of the second coalescence filter. In a particularly preferred embodiment, however, in a separator according to the invention having two coalescence filters, a second supply is also provided, through which the fluid stream can flow under overpressure and which opens into the interior space of the second coalescence filter. Such a separator according to the invention would have a first supply, through which the fluid stream can flow under overpressure and which opens into the interior space of the first coalescence filter, and a second supply, through which the fluid stream can flow under overpressure, which opens into the interior space of the second coalescence filter. In a preferred embodiment, the plurality, preferably all coalescence filters provided in the decompression chamber, are designed the same. The presence of several coalescence filters in the decompression chamber can, on the one hand serve, in operating situations having a particularly high amount of fluid stream, to distribute the fluid stream over a plurality of coalescence filters. Likewise, operating situations are conceivable in which the fluid stream is conducted only into the interior space of a coalescence filter and no fluid stream is conducted into the interior space of another coalescence filter. This makes it possible, for example, to replace the coalescence filter not flowed through as part of a maintenance, for example, when it has clogged up.

In a preferred embodiment, the second coalescence filter can also have a particle filter.

In a preferred embodiment of a separator according to the invention having a plurality of coalescence filters, the separator either has a switch, by means of which the distribution of the fluid stream to the coalescence filters can be set, or embodiments are realized in which the respective supply to the respective interior space of the coalescence filter has blocking means, such as valves, in particular pressure relief valves, with which the inflow of fluid stream into the interior space of the respective coalescence filter can be stopped. The use of pressure relief valves provides an easy way to stave off a peak load. If a particularly large amount of liquid accumulates, which is conducted into the interior of a coalescence filter and can not penetrate there sufficiently quickly through the coalescence filter, the liquid completely fills the interior space of the coalescence filter and then dams up back in the supply or a line connected upstream of the supply. This backlog increases the pressure of the liquid located in the supply or the liquid located in a line connected upstream of the supply. This pressure increase can be used to open a pressure relief valve, which then gives the liquid the opportunity to flow into the interior of a further coalescence filter. Alternatively, controllable solenoid valves are conceivable.

In a preferred design, a pressure sensor and/or a temperature sensor is provided in the supply. In a preferred design, a pressure sensor and/or a temperature sensor is provided in a line upstream of the supply, in particular in a line of a compressed air system in accordance with the invention upstream of the supply. In a preferred embodiment, a pressure sensor and/or a temperature sensor is provided in the decompression chamber. The pressure sensor provided in the decompression chamber or the temperature sensor provided in the decompression chamber is particularly preferably arranged outside the coalescence filter. Additionally or alternatively, a temperature sensor or a pressure sensor can be provided inside the coalescence filter. In embodiments in which a particle filter is provided in the interior space of the coalescence filter, it is conceivable to arrange a pressure sensor and/or a temperature sensor outside the particle filter, but in the interior space of the coalescence filter. The existing pressure sensors can be used in particular as differential pressure sensors. In particular, when the differential pressure is measured over time, changes in the differential pressure can be detected, allowing conclusions about the state of a respective component. If, for example, the differential pressure across the particle filter is measured via a pressure sensor arranged in the interior space of the particle filter and a pressure sensor arranged outside the particle filter, but in the interior of the coalescence filter, it can be determined from increasing differential pressure whether the particle filter clogs up.

Furthermore, it is conceivable to arrange a pressure sensor in the interior space of the coalescence filter (and as far as a particle filter is present in the interior space, outside of the particle filter). If the ambient pressure (and thus the pressure in the decompression chamber outside of the coalescence filter) is known, then the differential pressure across the coalescence filter medium can be determined using the values of this pressure sensor. If the pressure in the decompression chamber outside the coalescence filter is not known, then this can be measured with a pressure sensor arranged there and the differential pressure can be determined from the measurements of the two pressure sensors. In particular, when the differential pressure is measured over time, changes in the differential pressure can be detected, the conclusions about the state of the coalescence filter.

If the presence of a pressure sensor is described in an embodiment, a so-called pressure measuring point can also be provided in a particularly preferred embodiment instead of the provision of a pressure sensor. A pressure measuring point is the outlet of a pressure line. The pressure line leads from the pressure measuring point to a pressure sensor. The use of pressure measuring points instead of pressure sensors in the preferred locations described above offers the advantage of a more compact design. Instead of providing a pressure sensor at the specific location, a pressure measuring point can simply be provided at this location. This approach allows, for example, the actual pressure sensors to be collected together in an electronic housing of the separator in versions with several pressure sensors and these pressure sensors to be connected to the pressure measuring point via pressure lines assigned to them.

In a preferred embodiment, the separation chamber has a UV light source, particularly preferably a UVC LED which emits UV light having a wavelength of 265 nm into the inside of the separation chamber. Such a UV light source can be used to reduce or prevent bacterial growth within the separation chamber.

In a preferred embodiment, the separator according to the invention comprises a device for producing silver ions, in particular a device for the electrolytic production of silver ions. In particular, the device for the electrolytic production of silver ions has an anode made of silver and particularly preferably a cathode made of stainless steel. In a preferred embodiment, the anode and/or the cathode of the device for the electrolytic production of silver ions are arranged in the decompression chamber. Additionally or alternatively, the anode and/or the cathode of the device for the electrolytic production of silver ions can be arranged in the separation chamber. Contact with silver ions can reduce bacterial growth in the liquid.

In a preferred embodiment, the liquid level sensor is a capacitive sensor. There are conceivable fields of application in which the capacity of the lower density liquid is so different from the capacity of the residual product or the capacity of the higher density liquid that the liquid level of the residual product or the higher density liquid can be detected alone with a capacitive sensor, without this measurement being affected by lower density liquid floating on the residual product or higher density liquid. For example, the dielectric constant of oil is about 2 while that of water is about 80. This allows the sensor to be designed so that it does not respond on contact with the oil (lower density liquid), responds in contact with water or a residual product that contains mostly water.

In a preferred embodiment, the separator has a housing. Preferably, the decompression chamber, the coalescence filter and the separation chamber and the dip tube arranged between the separation chamber and the decompression chamber are arranged in the housing. This makes the separator a good transportable, self-transportable good. In a preferred embodiment, a supply opening or a feed inlet connection is provided on the housing, from which the supply leads to the interior space of the coalescence filter. In a preferred embodiment, a collection container for lower density liquid is provided in the housing, wherein a pipeline leads from the upper outlet to the collection container. Alternatively, the housing can have an outlet port for the lower density liquid, wherein a pipeline leads from the upper outlet to the outlet port for the lower density liquid. In a preferred embodiment, in the housing, a collection container for the liquid, the residual product or the higher density liquid is provided, wherein a pipeline leads from the lower outlet to the collection container. Alternatively, the housing can have an outlet connection for the residual product or the higher density liquid, wherein in a first embodiment, a pipeline leads from the lower outlet to the outlet connection for the residual product or the higher density liquid. In a second embodiment, further components are interposed between the lower outlet and the outlet connection for the residual product or the higher density liquid, for example, an activated carbon filter and/or a pump.

In a preferred embodiment, the decompression chamber and/or the dip tube and/or the separation chamber are solid bodies. Particularly preferably, the decompression chamber has solid walls and/or the dip tube is a solid pipe and/or the separation chamber has solid walls. In particular, the walls can be made of plastic, metal, glass or ceramics. The dip tube can also be particularly preferably made of plastic, metal, glass or ceramic. However, embodiments are also conceivable in which the decompression chamber is designed as a bag and/or the dip tube is designed as a hose and/or the separation chamber is designed as a bag. In particular, in areas of technology in which work is carried out in batches and when changing from one batch to the next batch, the separator would have to be cleaned with great effort to avoid contamination of the subsequent batch, the use of bags can provide the option of a single-use separator. The bags can be made of polypropylene (PP) film, polyethylene (PE) film, polyvinyl chloride (PVC) film, polytetrafluoroethylene (PFTE) film, silicone or an elastomer in general.

The method according to the invention for separating a lower density liquid, in particular an oil, from a fluid stream containing a mixture of a gas, the lower density liquid and a higher density liquid, in particular water, comprises the following steps:
- Supplying the fluid stream under overpressure via a supply into the interior space of a coalescence filter, which is arranged in a decompression chamber and the interior space of which is at least partially surrounded by a coalescence filter medium,
- Passing of the lower density liquid and the higher density liquid through the coalescence filter medium,
- Collecting the lower density liquid and the higher density liquid in a lower region of the decompression chamber,
- Conveying the lower density liquid and the higher density liquid through a dip tube into a separation chamber, wherein the dip tube has a first opening in the lower region of the decompression chamber and a second opening in the separation chamber, and
- Floating at least a part of the lower density liquid on a residual product in the separation chamber.

The method according to the invention speaks of a passage of the lower density liquid and the higher density liquid through the coalescence filter medium. The separate mention of the lower density liquid and the higher density liquid does not mean that the lower density liquid separates from the higher density liquid through the coalescence filter medium. On the contrary, the separate mention of the lower density liquid and the higher density liquid is intended to express that it is not essential to the most general form of the invention in which spatial and temporal relationship to each other the lower density liquid and the higher density liquid pass through the coalescence filter medium. It is assumed that the lower density liquid and the higher density liquid pass through a coalescence filter medium as a mixture, wherein individual drops of the lower density liquid coalesce with each other into larger droplets and/or individual droplets of the higher density liquid coalesce with each other into larger droplets. Most preferably, the coalescence filter medium is selected to be better wettable by the dispersed phase than by the continuous phase. Thus, droplets of the dispersed phase remain more easily attached to elements such as fibers of the coalescence filter medium, while for droplets of the continuous phase, the passage is easier. By retaining the droplets of the dispersed phase, there is an increased chance that a further drop of the dispersed phase will strike the retained droplets and coalesce therewith into a larger droplet.

In a preferred embodiment, the pressure level of the decompression chamber is lower than the overpressure of the fluid stream in the supply line. In a preferred embodiment, atmospheric pressure is present in the decompression chamber.

In a preferred embodiment, the liquid level of the residual product, thus the liquid level below the phase boundary in the separation chamber is measured by means of a liquid level sensor and, depending on the measured liquid level, a valve closing the lower outlet is activated and/or a pump connected downstream of the lower outlet is activated. As described above, the liquid level in the separation chamber can be controlled as a result.

In a preferred embodiment, the lower density liquid is oil, in particular a compressor oil. Additionally or alternatively, in a preferred embodiment, the higher density liquid is water. In a preferred embodiment, the density of the lower density liquid is in the range of 0.6 to 0.95 g/ cm3. In a preferred embodiment, the density of the higher density liquid is in the range of 0.8 to 1.5 g/cm 3, but greater than the density of the lower density liquid.

In a preferred embodiment, the fluid stream under overpressure is supplied by a continuous fluid stream. In an alternative embodiment, the supply of the fluid stream under overpressure is discontinuous. In fields of application in which the fluid stream under overpressure is the condensate stream of a condensate drain, embodiments are conceivable in which a condensate drain has a closed valve which is opened either at certain temporal intervals or depending on collected condensate in a condensate collector and over a certain period of time or over a certain volume, discharges condensate from the condensate drain into the condensate discharge line. This results in a pulsating condensate discharge stream, which can be the fluid stream which is supplied to the separator according to the invention.

In a preferred embodiment, the fluid stream is a mixture of a gas, a lower density liquid, and a higher density liquid. In a preferred embodiment, the fluid stream has the most volume fraction of the higher density liquid. In a preferred embodiment, the lower density liquid is the proportion of the mixture which has the smallest volume fraction. In a preferred embodiment, the volume fraction of the gas is the middle proportion. The volume fraction of higher density liquid (for example, water) relative to the volume fraction of the lower density liquid (for example, oil) in the mixture is preferably between 1000:1 and 10,000:1 (for example, at 2,000 volume faction water to one volume fraction oil), especially preferably between 2,000:1 and 7,000:1. The volume fraction of gas (for example, air) relative to the volume fraction of the lower density liquid (for example, oil) in the mixture is preferably between 200:1 and 5,000:1 (for example, at 700 volume fraction air to one volume fraction oil), more preferably between 500:1 and 2,000:1. For example, the volume fraction of high density liquid - low density liquid - gas can be 5000: 1:700. In a preferred embodiment, the fluid stream also has a solid phase in the form of solid particles. The mass concentration of the solid phase can be in the range of 10 to 400 mg/l, preferably 50 to 200 mg/l.

The mixture can be an emulsion.

The use according to the invention provides the use of the separator according to the invention for separating a lower density liquid, in particular from an oil, from a fluid stream containing a mixture of a gas, the lower density liquid, and a higher density liquid, in particular water.

The compressed air system according to the invention has a component which introduces water and oil into the compressed air and a separator according to the invention.

The compressed air system according to the invention particularly preferably has a condensate drain. Particularly preferably, the condensate drain has a condensate outlet. The condensate outlet can be directly the supply of the separator according to the invention. Particularly preferred, however, is a pipeline between the condensate outlet and the supply of the separator according to the invention. In a preferred embodiment, a temperature sensor and/or a pressure sensor is provided in this pipeline. The pipeline can be a condensate collecting line into which the condensate outlets of several condensate drains flow.

The invention also relates to a method for exchanging a coalescence filter and/or a particle filter in a separator according to the invention. The method provides for the removal of a coalescence filter located in the decompression chamber and/or the removal of a particle filter located in the decompression chamber and the insertion of a coalescence filter into the decompression chamber and/or the insertion of a particle filter into the decompression chamber. One of the advantages of the invention is that ambient pressure prevails in the decompression chamber. The decompression chamber thus does not have to be sealed from the environment. This makes it easier to access the decompression chamber. For example, the decompression chamber can simply be an open topped pot. In such an embodiment, the coalescence filter arranged in the decompression chamber or the particle filter arranged in the decompression chamber, for example, in the interior space of a coalescence filter, can be reached particularly well. This good accessibility is due to the idea according to the invention of having ambient pressure in the decompression chamber. Thus, this advantage of the invention is realized anew each time when the coalescence filter or the particle filter is replaced. If the opening of the decompression chamber is closed by a lid with an opening and/or a filter, this has no significant influence on the simple replacement of the coalescence filter or particle filter made possible by the invention. Because in contrast to designs in which the coalescence filter is immersed in a liquid (which would make a special sealing of the container necessary) or designs in which the coalescence filter is arranged in a pressure chamber, which must be particularly sealed against the environment, the decompression chamber of the separator according to the invention can easily executed and easily opened, even when its opening is closed by a lid with an opening or a filter. Sealing measures are not required and do not have to be done again after replacing the coalescence filter or the particle filter. Thus, this advantage of the invention is realized anew each time when the coalescence filter or the particle filter is replaced.

The invention finds particular use in separating oil as a dispersed phase from water as a continuous water, wherein gas inclusions, in particular air pockets and particle loading, are additionally possible. However, it is also conceivable to use the invention when separating water from a fuel, for example, diesel. The invention can be used to purify "waste products" of a process, such as purifying the condensate in a compressed air system. However, the application of the invention is not limited to the purification of such products. There are certainly conceivable applications in which the main product of the process is conducted through the separator according to the invention. The invention is particularly suitable for use in the following technical fields:
- Liquid-liquid extraction, in particular when obtaining a product by separating extraction agent and solvent;
- Biotechnology: When extracting an oily product from an aqueous phase;
- Pharmaceuticals: When separating a synthesis product from a synthesis by-product or an excess starting material;
- Refrigerant circuits of coolers/refrigerators: Separation of water from the refrigerant;
- hydraulic systems: separation of water from hydraulic oil
- Refinery plants: separation of water from petrochemical products.

The invention is explained with reference to a drawing illustrating only embodiments of the invention. Shown therein:
- Fig. 1: a schematic view of a compressed air system;
- Fig. 2: a schematic view of a separator according to the invention;
- Fig. 3: a schematic representation of a separation chamber having deflection pot and dip tube of a separator according to the invention;
- Fig. 4: a perspective top view of a part of a coalescence filter with part of a particle filter of a separator according to the invention, which part of a particle filter can be inserted into the interior space of the coalescence filter, but is arranged next to the coalescence filter in the view of Fig. 4;
- Fig. 5: a perspective top view of a part of a coalescence filter with part of a particle filter of a separator according to the invention, which part of a particle filter can be inserted into the interior space of the coalescence filter, arranged in the coalescence filter in the view of Fig. 5;
- Fig. 6: a schematic view of an alternative construction of a separator according to the invention; and
- Fig. 7: a sectional view through a coalescence filter, as it can be used in a separator according to the invention.

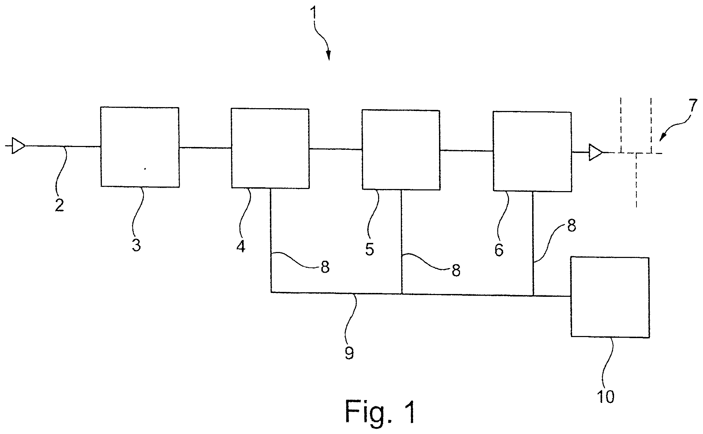

Fig. 1 shows a schematic representation of a compressed air system 1. The compressed air system 1 has a feed inlet 2, via which air enters the system. The air can be fresh air, but it can also be a return flow from a compressed air pipeline network. The compressed air system 1 has a compressor. 3 This compressor can be, for example, an oil injected screw compressor. The compressor 3 compresses the air entering via the feed inlet 2 and thus generates compressed air. The compressed air generated by the compressor 3 is supplied to a filter 5 via a cyclone separator 4. The compressed air thus supplied is supplied via a further line to a cooling dryer 6. The dried and filtered compressed air leaving the cooling dryer 6 via a line can be fed into a compressed air pipeline network 7 indicated only schematically.

The cyclone separator 4, the filter 5 and the cooling dryer 6 each have a condensate discharge line 8, which in each case transfer condensate accumulating in the cyclone separator 4, the filter 5 or the cooling dryer 6 into a condensate collecting line 9. The condensate collecting line 9 leads to a separator 10 for separating a lower density liquid, namely an oil from a fluid stream, namely the condensate stream in the condensate collecting line 9, which condensate stream contains a mixture of a gas, namely air, of the lower density liquid, namely oil, and a higher density liquid, namely water.

The compressed air located after the compressor 3 in the pipeline system has a higher pressure than the atmosphere. Thus condensate, which is drained into the cyclone separator 4, the filter 5 or the cooling dryer 6 also has a higher pressure than the atmosphere. The pressure level applied specifically in the condensate collecting line 9 depends on the flow resistance over the separator 10 according to the invention, in particular on the flow resistance of the coalescence filter 15 or the coalescence filters 15. If the coalescence filter 15 is free, then a lower pressure level is established in the condensate collecting line 9 than when the coalescence filter 15 has already been clogged up and thus has a higher flow resistance. Then the pressure level in the condensate collecting line 9 is higher.

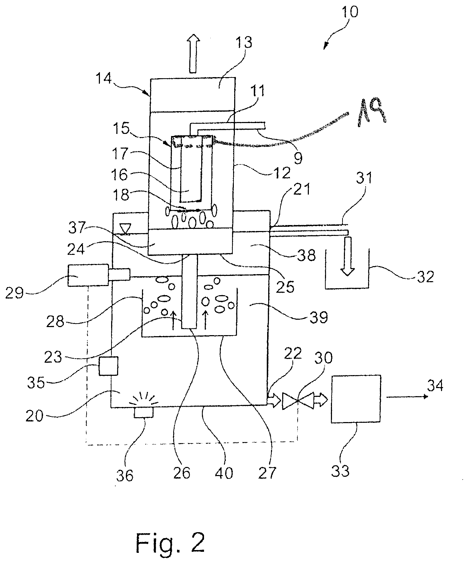

The separator according to the invention shown in Fig. 2 for separating a lower density liquid, namely an oil from a fluid stream, which contains a mixture of a gas, namely air, the lower density liquid, namely oil and a higher density liquid, namely water, has a supply 11, through which the fluid stream can flow under pressure. The supply 11 is a pipeline running within a decompression chamber 12, which adjoins the condensate collecting line 9. The decompression chamber 12 has a decompression opening 13. The decompression chamber 12 is designed pot-like, so that the decompression opening 13 can make up the complete open cross-section at the upper end of the pot. But it is also conceivable that the decompression chamber 12 is closed by a (not shown) lid and has a vent hole. Due to the expected pressure conditions and flow velocities, it is to be expected that a relatively small hole is sufficient to establish the pressure balance between the interior of the decompression chamber 12 and the ambient pressure. A filter 14 is arranged in the decompression opening 13, which filter can bind odors and/or volatile organic carbon. The interior of the decompression chamber 12 can be connected to the environment of the decompression chamber 12 via the decompression opening 13. A pressure level lower than the overpressure of the fluid stream prevails in the environment of the decompression chamber 12. Particularly preferably, ambient pressure prevails in the environment of the decompression chamber 12.

A coalescence filter 15 is arranged in the decompression chamber 12. The coalescence filter has an interior space 16. The interior space 16 is partially surrounded by a coalescence filter medium 17. In this case, the coalescence filter medium 17 has a hollow cylindrical shape and also forms the bottom 18 of the coalescence filter 15. In addition, the coalescence filter 15 has a lid 19. The lid 19 has an opening, to which the supply 11 is connected and through which the condensate stream flows into the interior space 16 of the coalescence filter 15, so that the supply 11 opens into the interior space 16.

A separation chamber 20 is arranged below the decompression chamber 12. The separation chamber has an upper outlet 21 for lower density liquid and a lower outlet 22 for a residual product, which can also be the higher density liquid.

A dip tube 23 is provided. The dip tube 23 has a first opening 24 in the lower region of the decompression chamber 12, namely in the bottom 25 of the decompression chamber 12. Furthermore, the dip tube 23 has a second opening 26 in the separation chamber 20.

A guide plate 27 is provided in the separation chamber 20. The guide plate 27 forms the bottom of a deflection pot 28. The second opening 26 of the dip tube 23 is located within the deflection pot 28.

A liquid level sensor 29 is provided in the separation chamber 20. The liquid level sensor measures the liquid level of the residual liquid in the separation chamber 20.

The lower outlet 22 is closed by a valve 30. The position of the valve body of the valve 30 can be changed based on a signal from the liquid level sensor 29. This makes it possible to transfer the valve from a closed position to an open position. Furthermore, in a preferred embodiment, it is possible to change the degree of opening of the valve 30 based on signals from the liquid level sensor.

The upper outlet 21 is designed as an overflow. An overflow pipeline 31 connects to it. A fluid can flow from the separation chamber 20 into a collection container 32 via the overflow pipeline 31.

An activated carbon filter 33 is connected downstream the valve 30. The liquid emerging through the valve 30 can be conducted through the activated carbon filter 33 to a discharge 34.

The separation chamber 20 has a turbidity sensor 35, with which the turbidity of the residual product can be determined. Furthermore, a UVC light source 36 is provided on the separation chamber 20, with which UV light can be radiated into the separation chamber 20.

For separating the lower density liquid, namely oil, from a fluid stream, namely the condensate stream conducted through the condensate collecting line, which contains a mixture of a gas, namely air, the lower density liquid, namely oil or a higher density liquid, namely water, the condensate stream flowing through the condensate collecting line 9 under overpressure is introduced into the interior space 16 of the coalescence filter 15 via the supply 11.

It is conceivable that, when the separator 10 is commissioned, the fluid stream under overpressure initially only decompresses in the interior space 16 of the coalescence filter 15, without there being any appreciable liquid passage through the coalescence filter medium. In such a case, the mixture of gas, oil and water initially collects in the interior space of the coalescence filter, wherein due to the pressure release during the first time flowing into the interior space of the coalescence filter after commissioning of the separator, there can initially be a lack of a pressure gradient between the interior space 16 of the coalescence filter 15 and the remainder of the interior of the decompression chamber 12. However, the longer the condensate stream is introduced via the supply 11 into the interior space 16 of the coalescence filter, the more the level of the mixture in the interior space 16 of the coalescence filter 15 will increase. If the interior space 16 of the coalescence filter 15 is filled with a mixture, further addition of mixture through the supply 11 results in an overpressure being created in the interior space 16 of the coalescence filter 15 with respect to the interior of the decompression chamber 12. This overpressure pushes the mixture through the coalescence filter medium 17 of the coalescence filter 15. As the mixture passes through the coalescence filter medium 17, smaller droplets of the lower density liquid, namely oil, coalesce into larger droplets and/or droplets of the higher density liquid, namely water, into larger droplets, wherein larger droplets of mixture can also form. The larger drops, as far as they have passed through the sidewalls of the coalescence filter medium, run downwards on the outer surface of the coalescence filter medium, following the principle of gravity. The droplets passing through the bottom 18 of the coalescence filter medium 17 and the droplets that follow gravity on the outer peripheral area of the coalescence filter medium 17 are released from the coalescence filter medium 17 by gravity and drip downward as shown in Fig. 2. The drops on the bottom 25 of the decompression chamber 12 form a liquid level 37. The mixture of oil and water, which forms the liquid level 37, passes by gravity through the first opening 24 in the dip tube 23 and leaves the dip tube 23 through the second opening 26 within the deflection pot 28. The fluid stream emerging from the second opening 26 is deflected by the guide plate 27 and flows upwards. The oil drops flow upwards due to the lower density. There is a separation, so that an oil layer 38 floats on a residual product 39. It can be assumed in this case that the proportion of oil droplets in the residual product 39 is lower the closer the considered region of the residual product 39 is to the bottom 40 of the separation chamber 20. It can be assumed that the regions of the residual product 39, which are located in the immediate vicinity of the bottom 40, consist only of water and are free of oil.

The liquid level of the residual product 39 in the separation chamber 20 increases through the addition of mixture through the dip tube 23 in the separation chamber 20, as long as the valve 30 is closed or the valve 30 is opened only so far that the volume flow flowing through the valve 30 is less than the volume flow passing through the second opening 26.

If the oil layer 38 reaches the upper outlet 21, it acts as an overflow and oil enters the overflow pipeline 31 and enters the collection container 32 through the overflow pipeline 31.

If the level of the residual product 39 reaches the liquid level sensor 29, there is the possibility of it changing the position of the valve 30, for example, to open the valve 30 or, for example, to change the degree of opening of the valve 30. If the valve 30 is opened, residual product 39 located in the vicinity of the lower outlet 22 flows through the lower outlet 22 and the valve 30 into the activated carbon filter 33. Here, the residual product 39 is freed from further residues and can then be discharged via the discharge 34. It is to be assumed that the liquid discharged using the discharge 34 is completely or, within the legal regulations, almost completely free from residues.

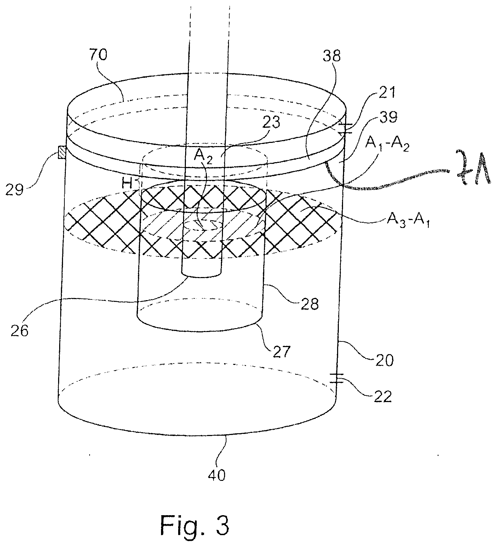

Fig. 3 shows that the deflection pot 28 is open at the top and thus has an upper opening through which the dip tube 23 protrudes into the deflection pot 28, so that the second opening 26 of the dip tube 23 is located in deflection pot 28. If the dip tube 23 protruding into the deflecting pot 28 were not present, this opening of the deflecting pot would have a cross-sectional area A1 in a horizontal plane. Due to its presence, the dip tube 23 protruding into the deflection pot 28 reduces the opening area of the deflection pot 28. In the same horizontal plane, the dip tube 23 has a cross-sectional area A2 predetermined by its outer circumference in this plane. For the passage of liquids upwards in the deflection pot 28, the annular residual area remaining around the dip tube 23 thus remains having the size A1 minus A2.

The deflection pot 28 is arranged in the separation chamber 20 with a hollow cylindrical wall, namely in a pot-shaped separation chamber 20. If the deflection pot 28 arranged in the separation chamber 20 with a hollow cylindrical wall were not present, the separation chamber 20 would have a cross-sectional area A3 in a horizontal plane. The deflection pot 28 arranged in the separation chamber 20 with hollow cylindrical wall narrows due to its presence the free cross-sectional area A3 of the separation chamber 20. In the same horizontal plane, the deflection pot 28 has a cross-sectional area A1' predetermined by its outer circumference in this plane (wherein in a first approximation, namely neglecting the wall thickness of deflection pot A1' = A1). For the passage of liquids through the free cross-section of the separation chamber 20 in this horizontal plane past the outside of the deflection pot 28, for example, a sinking of liquid in the direction of the bottom of the separation chamber 20, the annular residual area remaining around the deflection pot thus remains having the size A3 minus A1' (which in a first approximation corresponds to A3 minus A1). Preferably (A3-A1)=(A1-A2)=20 to 50 x A2.

The liquid level 70 of the lower density liquid is further indicated in Fig. 3. This is in the operating situation shown in Fig. 3 is in alignment with the lower edge of the upper outlet 21. Also shown is the phase boundary 71 between the oil layer 38 floating on the residual product 39 and the residual product 39. The liquid level sensor 29 is arranged so as to detect when the phase boundary 71 falls to a height H. The height H is the distance between the upper edge of deflection pot 28 and the phase boundary. The outer peripheral surface of a (imaginary and indicated by dashed lines in Fig. 3) hollow cylindrical body, which adjoins the top of the deflection pot, can be described with the height H and the radius/diameter of deflection pot 28. In a preferred embodiment, the method according to the invention is performed such that the phase boundary 71 has at least the distance H from the upper edge of the deflection pot, so that the liquid upwardly rising in the deflection pot 28 and passing through the surface (A1-A2) is supplied a hollow cylindrical passage area of H × 2 × π × √(A1/π) extending over the upper edge of deflection pot 28 to the phase boundary 28. Thus, the liquid rising in the deflection pot 28 is given enough space below the phase boundary 71 in order to flow radially outward over the upper edge of deflection pot 28 and down the outside the deflection pot 28 towards the bottom 40 of the separation chamber 20.

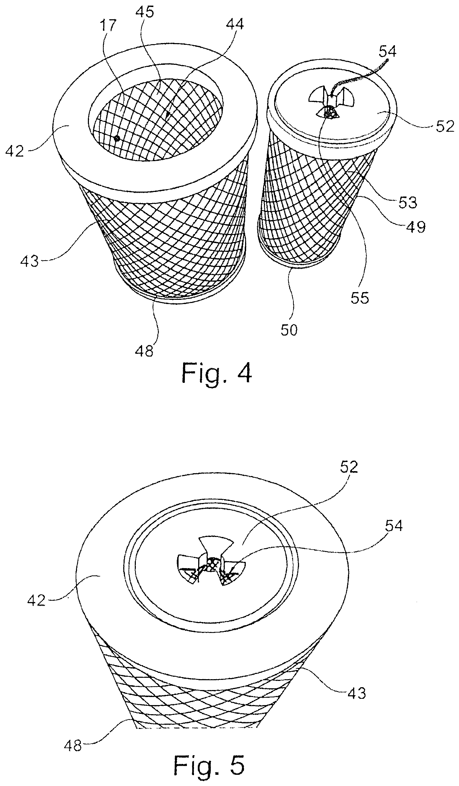

Fig. 4 shows a perspective view of a part of the coalescence filter 15 and of a part of the particle filter 41, which can be used in the context of the separator 10 according to the invention. Fig. 4 shows the part associated with the coalescence filter 15 and the part associated with the particle filter 41 in the disassembled state. The part belonging to the coalescence filter 15 and the part belonging to the particle filter 41 are designed in this design as DOE cartridges (double open end cartridges). They are supplemented by an upper end plate (not shown in Fig. 4) and a lower cover plate (not shown in Fig. 4) for forming the coalescence filter 15 and the particle filter 41.

The part of the coalescence filter 15 shown in Fig. 4 has an upper end ring 42, an outer support grid 43 and a lower end ring 48. The upper end ring 42 has an opening 44. The outer circumference of the upper end ring 42 merges into the outer circumference of the outer support grid 43. As a result, a support is created with which the coalescence filter 15 can be placed on a support of the decompression chamber 12 and thus maintained in a fixed spatial relationship to the other elements of the decompression chamber 12. The coalescence filter 15 further has an inner support grid 45. A hollow cylindrical coalescence filter medium 17 is arranged between the inner support grid 45 and the outer support grid 43. The interior space of the coalescence filter 15 is surrounded by the hollow cylindrical coalescence filter medium 17.

The particle filter 41 has an upper end ring 52, an outer support grid 53 and a lower end ring 50. The upper end ring 52 has an opening 54. The outer circumference of the upper end ring 52 merges into the outer circumference of the outer support grid 53. This creates a shoulder. The particle filter 41 further has an inner support grid 55. A hollow cylindrical particle filter medium 49 is arranged between the inner support grid 55 and the outer support grid 53 (a pleated particle filter medium can also be used). The interior space of the particle filter 41 is surrounded by the hollow cylindrical particle filter medium 49.

Fig. 5 shows the state in which the part of the particle filter 41 illustrated in Fig. 4 has been inserted into the interior space 16 of the coalescence filter 15. The upper end ring 52 thereby sits in the opening 44. To form a coalescence filter 15, the parts shown in Fig. 5 can be closed above and below by an (not shown in Fig. 4 and Fig. 5) upper end plate having an opening aligned with the opening 54 and with a (not shown in Fig. 4 and Fig. 5) lower end plate. For this purpose, O-rings are placed on the upper end ring 42, the upper end ring 52 and under the lower end ring 48 and under the lower end ring 50 and placed thereon, or below the upper end plate and the lower end plate. The upper end plate and the lower end plate are clamped together by clamping elements. As a result, tight chambers are formed, which cause the liquid to be able to enter only through the opening aligned with the opening 54 and can escape only after passing through the particle filter medium 49 and after passing through the coalescence filter medium 17 on the outer peripheral surface of the coalescence filter 15.

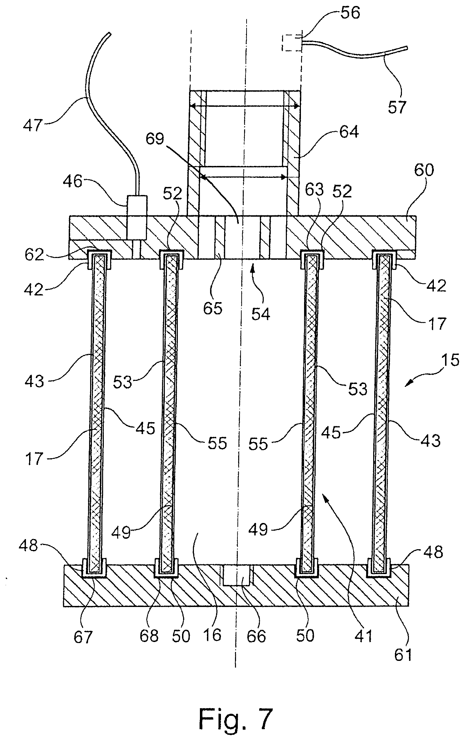

Fig. 7 shows a sectional view through a coalescence filter, as it can be used in a separator according to the invention. As in the embodiment shown in Figs. 4 and 5, the coalescence filter 15 has an upper end ring 42, an outer support grid 43, and a lower end ring 48. The outer circumference of the upper end ring 42 merges into the outer circumference of the outer support grid 43. The coalescence filter 15 further has an inner support grid 45. A hollow cylindrical coalescence filter medium 17 is arranged between the inner support grid 45 and the outer support grid 43. The interior space of the coalescence filter 15 is surrounded by the hollow cylindrical coalescence filter medium 17. The particle filter 41 has an upper end ring 52, an outer support grid 53 and a lower end ring 50. The upper end ring 52 has an opening 54. The outer circumference of the upper end ring 52 merges into the outer circumference of the outer support grid 53. The particle filter 41 further has an inner support grid 55. A hollow cylindrical particle filter medium 49 is arranged between the inner support grid 55 and the outer support grid 53 (a pleated particle filter medium can also be used). The interior space of the particle filter 41 is surrounded by the hollow cylindrical particle filter medium 49.

Furthermore, an upper end plate 60 and a lower end plate 61 are shown in Fig. 7. The upper end plate 60 has a circumferential outer annular groove 62, in which the upper end ring sits in a form-fitting. In the outer annual groove 62 an O-ring is placed (not depicted in Fig. 7). The upper end plate 60 has a circumferential inner annular groove 63, in which the upper end ring 52 sits in a form-fitting . In the inner annual groove 63 an O-ring is placed (not depicted in Fig. 7). The upper end plate 60 has a connecting piece 64 having an internal thread, which serves as a supply 11 and by means of which the coalescence filter 15 can be screwed to the end of a (indicated by dashed lines in Fig. 7) pipeline network. A support ring 65 supported by spokes is provided In the connecting piece 64. A (not shown in Fig. 7) threaded pin can be guided by the support ring 65 and screwed into the internal thread 66 in the lower end plate 61. The threaded pin penetrates the support ring 65, so that a nut screwed onto the threaded pin from above can be brought into abutment with the support ring 65 from above. The clamping force can be adjusted by tightening the nut, with which force the upper end plate 60 and the lower end plate 61 are pressed onto the elements arranged therebetween.

The lower end plate 61 has a circumferential outer annular groove 67, in which the lower end ring sits in a form-fitting. In the outer annual groove 67 an O-ring is placed (not depicted in Fig. 7). The lower end plate 61 has a circumferential inner annular groove 68, in which the lower end ring 50 sits in a form-fitting. In the inner annual groove 68 an O-ring is placed (not depicted in Fig. 7).

A hole 69 is provided in the upper end plate 60, a pressure sensor 46 being arranged with a signal line 47 at the end of said hole (alternatively a pressure measuring point can be provided). The pressure sensor 46 can measure the pressure in the annular chamber between the outer circumference of the particle filter 41 and the inner circumference of the coalescence filter medium 17.

A pressure sensor 56 is provided with a signal line 57 in the pipeline network above the connecting piece 64 (alternatively a pressure measuring point can be provided). The pressure sensor 56 measures the pressure present in the pipeline network and thus the pressure in the interior of the particle filter 41.

The coalescence filter 15 shown in Fig. 7 can be arranged suspended in a decompression chamber 12. For example, the protrusion between the upper end plate 60 and the outer support grid 43 can be used as a support for a support ring. Likewise,

it is conceivable to place the coalescence filter 15 with the lower end plate 61 on a platform provided with legs and placed on the bottom 25 of the decompression chamber 12.

The pressure difference across the particle filter medium 49 can be measured by evaluating the measurement results of the pressure sensor 46 and the pressure sensor 56. If one considers the thus measured pressure difference over time, then information about the state of the particle filter medium 49 can be derived therefrom. If the pressure difference reaches a certain value, it can be concluded that the particle filter medium 49 has been clogged up to some degree and the particle filter 41 can need to be replaced. If the measured pressure difference falls below a certain value, then it is to be expected that the particle filter medium is cracked.

By evaluating the measurement results of the pressure sensor 46 and assuming that atmospheric pressure prevails inside the decompression chamber 12, the pressure difference across the coalescence filter medium 17 can be measured. If one considers the thus measured pressure difference over time, then information about the state of the coalescence filter medium 17 can be derived therefrom. If the pressure difference reaches a certain value, it can be concluded that the coalescence filter medium 17 has been clogged up to some degree and the coalescence filter 15 may need to be replaced. If the measured pressure difference falls below a certain value, then it is to be expected that the coalescence filter 17 medium is cracked.

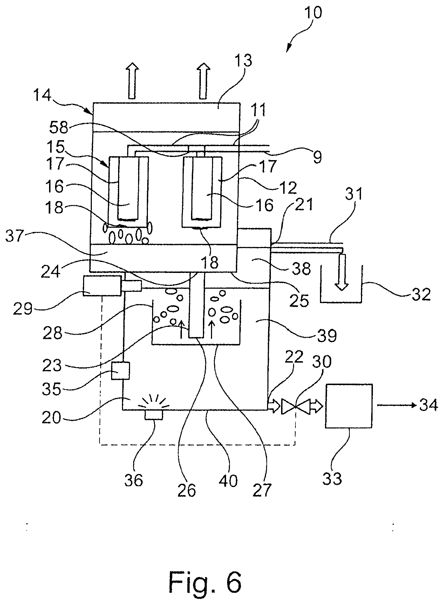

Fig. 6 shows the possibility that the decompression chamber 12 can also have two coalescence filters 15. A valve 58 can be provided in the supply 11. Using this valve 58, there can be control over the fluid stream being conducted from the condensate collecting line 9 into the interior space 16 of the coalescence filters 15 regarding into which interior 16 or in what ratio relative to each other. In this case, operating positions are conceivable in which the condensate stream is conducted solely into the interior space 16 of the right coalescence filter, with which the left coalescence filter 15 becomes free for replacement. It is also conceivable to direct the condensate alone into the left coalescence filter 15 into the interior space 16 of the left coalescence filter 15, while the right coalescence filter 15 remains free, for example, to be replaced. It is also conceivable to direct condensate both into the interior space 16 of the right coalescence filter 15 and into the interior space 16 of the left coalescence filter 15, for example, in order to be able to work off peaks in the volume flow of the condensate.

According to the embodiment shown in Fig. 6, a common liquid level 37 is formed, which can be conducted via a common dip tube 23 into a common separation chamber 20. It is of course also possible to change the relative position of the dip tube 23 relative to the two coalescence filters 15, for example, to arrange the dip tube 23 in the middle.

In an alternative embodiment, it is conceivable to have a decompression chamber 12 interact with two dip tubes 23 and two separation chambers 20. In this case, one would arrange the first dip tube 23 below the right coalescence filter 15 and the second dip tube below the left coalescence filter. The two dip tubes can either be conducted into the same separation chamber 20 or it is even conceivable to provide two separate separation chambers.

The use of multiple coalescence filters 15 in a separator offers the possibility of different types of process control. Thus, a process control is conceivable in which the liquid is primarily passed through a coalescence filter 15 while the supply 11 is closed to a second coalescence filter 15, for example, by a pressure relief valve. The second coalescence filter 15 is used for support, for example, in the event of a sudden accumulation of liquid. In such an operating situation, the resulting higher pressure in the condensate collecting line 9 can lead to opening of the pressure relief valve and lead to a part of the abruptly accumulated larger amount of liquid flowing through the second coalescence filter 15. In such operation, the first coalescence filter 15 gradually primarily clogs up, while the second coalescence filter 15 remains almost unused. If, after a certain period of operation, the coalescence filter 15 becomes so clogged up that it has to be exchanged, the liquid can be diverted to the second (virtually unused) coalescence filter 15 and the supply 11 to the first coalescence filter 15 can be blocked. The first coalescence filter 15 can then be exchanged. During further operation, the liquid is primarily led over the coalescence filter that remained in the system and the replaced coalescence filter takes over the task of a reserve position.

It is also conceivable to provide a plurality of separators 10 within the compressed air system shown in Fig. 1.

## Claims

1. A separator (10) for separating a lower density liquid, in particular an oil, from a fluid stream containing a mixture of a gas, the lower density liquid and a higher density liquid, in particular water, the separator having
• a supply (11) through which the fluid stream can flow a) under overpressure or b) a pressure which is below an overpressure and wherein the fluid can be pressurized via a pressure line, and
• a decompression chamber (12) having a decompression opening (13), which can be connected via the decompression opening (13) to an environment in which a pressure level lower than the pressure of a) the fluid stream prevails or b) the pressurized fluid prevails, and
• a coalescence filter (15), which is arranged in the decompression chamber (12) and has an interior space (16) at least partially surrounded by a coalescence filter medium (17), the supply (11) opening into the interior space (16), and
• a separation chamber (20) arranged below the decompression chamber (12) and having an upper outlet (21) for lower density liquid and a lower outlet (22) for a residual product, and
• having a dip tube (23) having a first opening (24) in the lower region of the decompression chamber (12) and a second opening (26) in the separation chamber (20).

2. The separator (10) according to claim 1, **characterized in that** a particle filter (41) is arranged in the interior space (16) of the coalescence filter (15).

3. The separator (10) according to claim 1 or 2, **characterized by** a guide plate (27), which is arranged opposite to the second opening (26) of the dip tube (23) within the separation chamber (20).

4. The separator (10) according to one of claims 1 to 3, **characterized in that** the upper outlet (21) is an overflow.

5. The separator according to one of claims 1 to 4, **characterized in that** an activated carbon filter (33) is connected downstream the lower outlet (22).

6. The separator (10) according to one of claims 1 to 5, **characterized in that** a liquid level sensor (29) is arranged in the separation chamber (20).

7. The separator (10) according to one of claims 1 to 6, **characterized in that** the lower outlet (22) is closed by a valve (30) and/or that a pump is connected downstream the lower outlet (22).

8. A method of separating a lower density liquid, particularly an oil, from a fluid stream containing a mixture of a gas containing the lower density liquid and a higher density liquid, in particular water, with a separation device according to any of the claims 1 to 7, the method comprising the following steps:
• supplying the fluid stream a) under overpressure via a supply (11) into the interior space (16) of a coalescence filter (15) or b) below overpressure into the interior space (16) of a coalescence filter (15) and pressurizing the supplied fluid via a pressure line, the coalescence filter (15) is arranged in a decompression chamber (12) and the interior space (16) of which is at least partially surrounded by a coalescence filter medium (17),
• passing of the lower density liquid and the higher density liquid through the coalescence filter medium (17),
• collecting the lower density liquid and the higher density liquid in a lower region of the decompression chamber (12),
• conveying the lower density liquid and the higher density liquid through a dip tube (23) into a separation chamber (20), the dip tube (23) having a first opening (24) in the lower region of the decompression chamber and a second opening (26) in the separation chamber (20), and
• floating at least a part of the lower density liquid on a residual product in the separation chamber (20).

9. The method according to claim 8, **characterized in that** the pressure level in the decompression chamber (12) is lower than a) the overpressure of the fluid stream in the supply (11) and/or b) the pressure in the pressure line.

10. The method according to claim 8 or 9, **characterized in that** the liquid level in the separation chamber (20) is measured by means of a liquid level sensor (29) and depending on the measured liquid level, a valve (30) closing the lower outlet (22) is activated and/or a pump connected downstream of the lower outlet (22) is activated.

11. The method according to one of claims 8 to 10, **characterized in that** the lower density liquid is oil and/or the higher density liquid is water.

12. A use of a separator (10) according to one of claims 1 to 7 for separating a lower density liquid, in particular an oil, from a fluid stream containing a mixture of a gas, the lower density liquid and a higher density liquid, in particular water.

13. A compressed air system (1) having a component that introduces water and oil into the compressed air and a separator (10) according to one of claims 1 to 7.

14. A method for exchanging a coalescence filter (15) and/or a particle filter (41) in a separator (10) according to one of claims 1 to 7, **characterized by** removing a coalescence filter (15) located in the decompression chamber (12) and/or removing a particle filter (41) located in the decompression chamber (12) and inserting a coalescence filter (15) into the decompression chamber (12) and/or inserting a particle filter (41) into the decompression chamber (12).

## Patentansprüche

1. Abscheider (10) zum Abscheiden einer Flüssigkeit geringerer Dichte, insbesondere eines Öls, aus einem Fluidstrom, der ein Gemisch aus einem Gas, der Flüssigkeit geringerer Dichte und einer Flüssigkeit höherer Dichte, insbesondere Wasser, enthält, wobei der Abscheider Folgendes aufweist
• eine Zuführung (11), durch die der Fluidstrom a) unter Überdruck oder b) einem Druck, der unterhalb eines Überdrucks ist, strömen kann und wobei das Fluid über eine Druckleitung unter Druck gesetzt werden kann, und
• eine Dekompressionskammer (12) mit einer Dekompressionsöffnung (13), die über die Dekompressionsöffnung (13) mit einer Umgebung verbunden werden kann, in der ein Druckniveau niedriger als der Druck a) des Fluidstroms vorherrscht oder b) des unter Druck stehenden Fluids vorherrscht, und
• einen Koaleszenzfilter (15), der in der Dekompressionskammer (12) angeordnet ist und einen Innenraum (16) aufweist, der zumindest teilweise von einem Koaleszenzfiltermedium (17) umgeben ist, wobei die Zuführung (11) in den Innenraum (16) mündet, und
• eine Abscheidekammer (20), die unterhalb der Dekompressionskammer (12) angeordnet ist und einen oberen Auslass (21) für Flüssigkeit geringerer Dichte und einen unteren Auslass (22) für ein Restprodukt aufweist, und
• mit einem Tauchrohr (23) mit einer ersten Öffnung (24) in dem unteren Bereich der Dekompressionskammer (12) und einer zweiten Öffnung (26) in der Abscheidekammer (20).

2. Abscheider (10) nach Anspruch 1, **dadurch gekennzeichnet, dass** ein Partikelfilter (41) in dem Innenraum (16) des Koaleszenzfilters (15) angeordnet ist.

3. Abscheider (10) nach Anspruch 1 oder 2, **gekennzeichnet durch** eine Leitplatte (27), die gegenüber der zweiten Öffnung (26) des Tauchrohres (23) innerhalb der Abscheidekammer (20) angeordnet ist.

4. Abscheider (10) nach einem der Ansprüche 1 bis 3, **dadurch gekennzeichnet, dass** der obere Auslass (21) ein Überlauf ist.

5. Abscheider nach einem der Ansprüche 1 bis 4, **dadurch gekennzeichnet, dass** ein Aktivkohlefilter (33) stromabwärts des unteren Auslasses (22) verbunden ist.

6. Abscheider (10) nach einem der Ansprüche 1 bis 5, **dadurch gekennzeichnet, dass** ein Flüssigkeitsniveausensor (29) in der Abscheidekammer (20) angeordnet ist.

7. Abscheider (10) nach einem der Ansprüche 1 bis 6, **dadurch gekennzeichnet, dass** der untere Auslass (22) durch ein Ventil (30) geschlossen ist und/oder dass eine Pumpe stromabwärts des unteren Auslasses (22) verbunden ist.

8. Verfahren zum Abscheiden einer Flüssigkeit geringerer Dichte, insbesondere eines Öls, von einem Flüssigkeitsstrom, der ein Gemisch aus einem Gas enthaltend die Flüssigkeit geringerer Dichte und einer Flüssigkeit höherer Dichte, insbesondere Wasser, enthält, mit einer Abscheidevorrichtung nach einem der Ansprüche 1 bis 7, wobei das Verfahren die folgenden Schritte umfasst:
• Zuführen des Fluidstroms a) unter Überdruck über eine Zuführung (11) in den Innenraum (16) eines Koaleszenzfilters (15) oder b) unter Überdruck in den Innenraum (16) eines Koaleszenzfilters (15) und Unterdrucksetzen des zugeführten Fluids über eine Druckleitung, wobei der Koaleszenzfilter (15) in einer Dekompressionskammer (12) angeordnet ist und der Innenraum (16) davon zumindest teilweise von einem Koaleszenzfiltermedium (17) umgeben ist,
• Leiten der Flüssigkeit geringerer Dichte und der Flüssigkeit höherer Dichte durch das Koaleszenzfiltermedium (17),
• Sammeln der Flüssigkeit geringerer Dichte und der Flüssigkeit höherer Dichte in einem unteren Bereich der Dekompressionskammer (12),
• Fördern der Flüssigkeit niedrigerer Dichte und der Flüssigkeit höherer Dichte durch ein Tauchrohr (23) in eine Abscheidekammer (20), wobei das Tauchrohr (23) eine erste Öffnung (24) in dem unteren Bereich der Dekompressionskammer und eine zweite Öffnung (26) in der Abscheidekammer (20) aufweist, und
• Schwimmen von zumindest einem Teil der Flüssigkeit geringerer Dichte auf einem Restprodukt in der Abscheidekammer (20).

9. Verfahren nach Anspruch 8, **dadurch gekennzeichnet, dass** das Druckniveau in der Dekompressionskammer (12) geringer als a) der Überdruck des Fluidstroms in der Zuführung (11) und/oder b) der Druck in der Druckleitung ist.

10. Verfahren nach Anspruch 8 oder 9, **dadurch gekennzeichnet, dass** das Flüssigkeitsniveau in der Abscheidekammer (20) mittels eines Flüssigkeitsniveausensors (29) gemessen wird und abhängig von dem gemessenen Flüssigkeitsniveau ein Ventil (30), das den unteren Auslass (22) schließt, aktiviert wird und/oder eine Pumpe, die stromabwärts des unteren Auslasses (22) verbunden ist, aktiviert wird.

11. Verfahren nach einem der Ansprüche 8 bis 10, **dadurch gekennzeichnet, dass** die Flüssigkeit geringerer Dichte Öl ist und/oder die Flüssigkeit höherer Dichte Wasser ist.

12. Verwendung eines Abscheiders (10) nach einem der Ansprüche 1 bis 7 zum Abscheiden einer Flüssigkeit geringerer Dichte, insbesondere eines Öls, aus einem Fluidstrom, der ein Gemisch aus einem Gas, der Flüssigkeit geringerer Dichte und einer Flüssigkeit höherer Dichte, insbesondere Wasser, enthält.

13. Druckluftsystem (1) mit einer Komponente, die Wasser und Öl in die Druckluft einführt, und einem Abscheider (10) nach einem der Ansprüche 1 bis 7.

14. Verfahren zum Austauschen eines Koaleszenzfilters (15) und/oder eines Partikelfilters (41) in einem Abscheider (10) nach einem der Ansprüche 1 bis 7, **gekennzeichnet durch** Entfernen eines Koaleszenzfilters (15), der sich in der Dekompressionskammer (12) befindet, und/oder Entfernen eines Partikelfilters (41), der sich in der Dekompressionskammer (12) befindet, und Einsetzen eines Koaleszenzfilters (15) in die Dekompressionskammer (12) und/oder Einsetzen eines Partikelfilters (41) in die Dekompressionskammer (12).

## Revendications

1. Séparateur (10) permettant de séparer un liquide de densité inférieure, en particulier une huile, d'un flux de fluide contenant un mélange d'un gaz, du liquide de densité inférieure et d'un liquide de densité supérieure, en particulier de l'eau, le séparateur comportant
• une alimentation (11) à travers laquelle le flux de fluide peut s'écouler a) sous surpression ou b) à une pression qui est inférieure à une surpression et dans lequel le fluide peut être mis sous pression via une conduite de pression, et
• une chambre de décompression (12) comportant une ouverture de décompression (13), qui peut être reliée via l'ouverture de décompression (13) à un environnement dans lequel règne un niveau de pression inférieur à la pression a) du flux de fluide ou b) du fluide sous pression, et
• un filtre à coalescence (15), qui est disposé dans la chambre de décompression (12) et comporte un espace intérieur (16) au moins partiellement entouré par un milieu filtrant à coalescence (17), l'alimentation (11) débouchant dans l'espace intérieur (16), et
• une chambre de séparation (20) agencée en dessous de la chambre de décompression (12) et comportant une sortie supérieure (21) pour le liquide de densité inférieure et une sortie inférieure (22) pour un produit résiduel, et
• comportant un tube plongeur (23) comportant une première ouverture (24) dans la région inférieure de la chambre de décompression (12) et une seconde ouverture (26) dans la chambre de séparation (20).

2. Séparateur (10) selon la revendication 1, **caractérisé en ce qu'**un filtre à particules (41) est disposé dans l'espace intérieur (16) du filtre à coalescence (15).

3. Séparateur (10) selon la revendication 1 ou 2, **caractérisé par** une plaque de guidage (27) qui est disposée à l'opposé de la seconde ouverture (26) du tube plongeur (23) à l'intérieur de la chambre de séparation (20).

4. Séparateur (10) selon l'une des revendications 1 à 3, **caractérisé en ce que** la sortie supérieure (21) est un trop-plein.

5. Séparateur selon l'une des revendications 1 à 4, **caractérisé en ce qu'**un filtre à charbon actif (33) est connecté en aval de la sortie inférieure (22).

6. Séparateur (10) selon l'une des revendications 1 à 5, **caractérisé en ce qu'**un capteur de niveau de liquide (29) est disposé dans la chambre de séparation (20).

7. Séparateur (10) selon l'une des revendications 1 à 6, **caractérisé en ce que** la sortie inférieure (22) est fermée par une vanne (30) et/ou **en ce qu'**une pompe est connectée en aval de la sortie inférieure (22).

8. Procédé de séparation d'un liquide de densité inférieure, en particulier une huile, d'un flux de fluide contenant un mélange d'un gaz contenant le liquide de densité inférieure et d'un liquide de densité supérieure, en particulier de l'eau, avec un dispositif de séparation selon l'une quelconque des revendications 1 à 7, le procédé comprenant les étapes suivantes :
• délivrance du flux de fluide a) sous surpression via une alimentation (11) dans l'espace intérieur (16) d'un filtre à coalescence (15) ou b) sous surpression dans l'espace intérieur (16) d'un filtre à coalescence (15) et mise sous pression du fluide délivré via une conduite sous pression, le filtre à coalescence (15) est disposé dans une chambre de décompression (12) et dont l'espace intérieur (16) est au moins partiellement entouré par un milieu filtrant à coalescence (17),
• passage du liquide de densité inférieure et du liquide de densité supérieure à travers le milieu filtrant à coalescence (17),
• collecte du liquide de densité inférieure et du liquide de densité supérieure dans une région inférieure de la chambre de décompression (12),
• transport du liquide de densité inférieure et du liquide de densité supérieure à travers un tube plongeur (23) dans une chambre de séparation (20), le tube plongeur (23) comportant une première ouverture (24) dans la région inférieure de la chambre de décompression et une seconde ouverture (26) dans la chambre de séparation (20), et
• flottaison d'au moins une partie du liquide de densité inférieure sur un produit résiduel dans la chambre de séparation (20).

9. Procédé selon la revendication 8, **caractérisé en ce que** le niveau de pression dans la chambre de décompression (12) est inférieur à a) la surpression du flux de fluide dans l'alimentation (11) et/ou b) la pression dans la conduite sous pression.

10. Procédé selon la revendication 8 ou 9, **caractérisé en ce que** le niveau de liquide dans la chambre de séparation (20) est mesuré au moyen d'un capteur de niveau de liquide (29) et en fonction du niveau de liquide mesuré, une vanne (30) fermant la sortie inférieure (22) est activée et/ou une pompe connectée en aval de la sortie inférieure (22) est activée.

11. Procédé selon l'une des revendications 8 à 10, **caractérisé en ce que** le liquide de densité inférieure est de l'huile et/ou le liquide de densité supérieure est de l'eau.

12. Utilisation d'un séparateur (10) selon l'une des revendications 1 à 7 pour séparer un liquide de densité inférieure, en particulier une huile, d'un flux de fluide contenant un mélange d'un gaz, le liquide de densité inférieure et un liquide de densité supérieure, en particulier de l'eau.

13. Système d'air comprimé (1) comportant un composant qui introduit de l'eau et de l'huile dans l'air comprimé et un séparateur (10) selon l'une des revendications 1 à 7.

14. Procédé permettant le remplacement d'un filtre à coalescence (15) et/ou d'un filtre à particules (41) dans un séparateur (10) selon l'une des revendications 1 à 7, **caractérisé par** le retrait d'un filtre à coalescence (15) situé dans la chambre de décompression (12) et/ou le retrait d'un filtre à particules (41) situé dans la chambre de décompression (12) et l'insertion d'un filtre à coalescence (15) dans la chambre de décompression (12) et/ou l'insertion d'un filtre à particules (41) dans la chambre de décompression (12).
